Europäisches Patentamt

European Patent Office

Office européen des brevets

(11) Veröffentlichungsnummer : **0 188 652**
**B1**

# (12) EUROPÄISCHE PATENTSCHRIFT

(45) Veröffentlichungstag der Patentschrift :
30.11.88

(21) Anmeldenummer : 85107355.1

(22) Anmeldetag : 14.06.85

(51) Int. Cl.⁴ : **B 23 K 11/22**

(54) Verfahren und Vorrichtung zur Herstellung von Bindedrähten zum Binden von gebündelten Gegenständen.

(30) Priorität : 24.12.84 CH 6176/84

(43) Veröffentlichungstag der Anmeldung :
30.07.86 Patentblatt 86/31

(45) Bekanntmachung des Hinweises auf die Patenterteilung : 30.11.88 Patentblatt 88/48

(84) Benannte Vertragsstaaten :
AT BE CH DE FR GB IT LI LU NL SE

(56) Entgegenhaltungen :
EP-A- 0 043 692
CH-A-   380 644
DE-B- 1 057 262
FR-A- 2 063 196
US-A- 3 934 108

(73) Patentinhaber : Gamper & Co., AG
Werkstrasse 3
CH-9542 Münchwilen (CH)

(72) Erfinder : Maeder, René
Wiesenstrasse 6
CH-8500 Frauenfeld (CH)
Erfinder : Herzog, Albin
Aadorferstrasse 32
CH-9548 Matzingen (CH)

(74) Vertreter : Nikolaiski, Eckhard Siegfried, Dr.
Postfach 16 Auwiesenstrasse 2
CH-8352 Räterschen (CH)

## Beschreibung

Die vorliegende Erfindung betrifft ein Verfahren zur Herstellung von verdickte Enden aufweisenden Bindedrähten zum Binden von gebündelten Gegenständen, insbesondere Betonarmierungseisen und Säcken, indem die Verdickungen durch Aufschmelzen der Enden eines Drahtabschnittes ausgebildet werden sowie eine Vorrichtung zur Durchführung des vorgenannten Verfahrens.

Bei dem bekannten Verfahren der vorstehend genannten Art (z. B. CH-PS 380,644) wird der Draht zunächst auf eine gewünschte Länge abgeschnitten und dann an seinen beiden Enden derart thermisch, z. B. mittels Flamme, Lichtbogen oder dielektrischer Erwärmung bearbeitet, dass an denselben Verdickung auftritt. Die Enden werden dabei angeschmolzen, sodass Tropfenbildung entsteht, die die Verdickung der Drahtenden bildet. Bei dem bekannten Verfahren kann die Verdickung jedoch nicht gleichmässig und zuverlässig reproduzierbar hergestellt werden. In vielen Fällen fällt der sich sehr schnell bildende Tropfen am Ende des Drahtabschnittes ab. Für eine zuverlässige Herstellung ist daher das bekannte Verfahren ungeeignet.

Es ist daher die Aufgabe der vorliegenden Erfindung, ein Verfahren und eine Vorrichtung der eingangs genannten Art zu schaffen, mit denen die Nachteile des bekannten Verfahrens vermieden werden können und mit denen die Bindedrähte kontinuierlich mit Verdickungen an beiden Enden von Drahtstücken hergestellt werden sollen.

Die Aufgabe wird für das Verfahren der eingangs genannten Art erfindungsgemäss dadurch gelöst, dass aufeinanderfolgend geförderte festgehaltene Drahtstreckenabschnitte eines kontinuierlich zugeführten Drahtes in einer einem Winkel von 45° bis 90° zur Horizontalen geneigten Stellung durch Aufschmelzen von demselben abgetrennt werden und dadurch die Verdickung an dem einen Ende des Drahtstreckenabschnittes ausgebildet wird und nachfolgend die Verdickung des anderen Endes des Drahtstreckenabschnittes durch Aufschmelzen in einer einem Winkel von 45° bis 90° zur Horizontalen geneigten Stellung desselben ausgebildet wird.

Unter Drahtstreckenabschnitt soll auch in den nachfolgenden Beschreibungsteilen und den Ansprüchen sowohl ein nicht abgetrennter als auch ein abgetrennter Streckenabschnitt des kontinuierlich zugeführten Drahtes verstanden und daher nachfolgend kurz mit « Drahtabschnitt » bezeichnet werden.

Durch die Stellung des Drahtabschnittes nach der Erfindung beim Auf- bzw. Anschmelzen seines Endes, die nachfolgend als vertikale bzw. im wesentlichen vertikale Stellung bezeichnet wird, kann die Wirkung der Schwerkraft quer zur Drahtlängsachse ausgeschaltet werden, wodurch die Gefahr des Abfallens bei der Bildung der Verdickung im aufgeschmolzenen Zustand des Drahtmaterials ausgeschlossen wird. Bei der Erwärmung kann sich vielmehr die Verdickung durch Materialnachschub in Drahtlängsachse aus dem Drahtabschnitt ausbilden, ohne dass wesentliche Querkräfte diese Ausbildung stören. Durch das Verfahren nach der Erfindung bleibt die Drahtlänge selbst im wesentlichen unbeeinträchtigt, weil die Ausbildung der Verdickung nicht an einer bereits vorgegebenen Drahtstücklänge vorgenommen wird. Das Trennen und Verdicken an dem einen Ende erfolgt in vorteilhafter Weise in einem einzigen Arbeitsschritt. Auch die Herstellung der Verdickung am anderen Ende des Drahtabschnittes erfolgt wegen der erfindungsgemässen Stellung desselben mittels Materialnachschub aus dem Drahtabschnitt selbst, sodass auch dort die Drahtlänge im wesentlichen unbeeinträchtigt bleibt. Die Stücklänge kann daher in gewünschter Weise vorgegeben und durch das Verfahren nach der Erfindung in wesentlichen eingehalten werden.

Die Verdickung kann köpfchenförmig, als Rundkopf, Kugelkopf, konisch, kubisch oder als Nagelkopf vorliegen bzw. ausgebildet werden. Es ist bekannt, dass beim Anschmelzen eines Drahtes sich ein Tropfen in Form eines Köpfchens bildet, der in bekannter Weise dem physikalischen Gesetz folgend in Richtung des Drahtes gezogen wird. Durch das erfindungsgemässe Verfahren · wird dieser Vorgang in keiner Weise durch die Stellung der Drahtabschnitte gestört, da das Anschmelzen in der vertikalen Stellung erfolgt. Die vertikale Stellung liegt im Winkel von 45-90° gegenüber der Horizontalen, d. h. mit anderen Worten weicht bis zu ± 45° von der Vertikalen ab.

In vorteilhafter Weise durchlaufen die Drahtabschnitte aufeinanderfolgend eine Klemmzone, in welche sie eingeklemmt werden, dann eine erste Schmelzzone zum Abtrennen des Drahtabschnittes und zum Ausbilden des verdickten Endes danach eine zweite Schmelzzone, in welcher das andere verdickte Ende durch Aufschmelzen ausgebildet wird und daran anschliessend eine Freigabezone, in welcher der fertige Bindedraht mit den beiden verdickten Enden freigegeben wird. In vorteilhafter Weise wird vorzugsweise der in Förderrichtung vordere Drahtabschnitt durch das Aufschmelzen abgetrennt und dadurch am vorlaufenden Ende des nachfolgenden Drahtabschnittes die Verdickung ausgebildet. Der Drahtabschnitt mit dem verdickten vorlaufenden Ende wird dann vorzugsweise durch das nachfolgende Aufschmelzen in der ersten Schmelzzone vom Draht abgetrennt, anschliessend mit seiner Längsachse mindestens im wesentlichen um 180° gekehrt und die Verdickung an seinem anderen Ende durch das Aufschmelzen ausgebildet. Hierbei ist vorteilhaft, wenn die Verdickung vorzugsweise an dem jeweiligen mindestens im wesentlichen nach oben oder aufwärts gerichteten bzw. stehenden Ende ausgebildet wird, weil dann die Verdickung ohne Störung in Richtung des Drahtes gezogen wird.

Es kann aber auch der in Förderrichtung vorderste Drahtabschnitt durch das Aufschmelzen abgetrennt und dadurch am nachfolgenden Ende des abgetrennten Drahtabschnittes die Verdickung ausgebildet werden. Dieser abgetrennte Drahtabschnitt mit dem verdickten nachlaufenden Ende kann dann mit seiner Längsachse um mindestens im wesentlichen 180° gekehrt und die Verdickung an seinem anderen Ende ausgebildet werden. Hierbei wird die Verdickung vorzugsweise an dem jeweiligen in der vertikalen Stellung herabhängenden anderen Ende ausgebildet. In vorteilhafter Weise wird dabei der Drahtabschnitt von seinem herabhängenden Ende weg zusätzlich erwärmt, damit sich die Verdickung ungestört entgegen der Schwerkraft zum Drahtabschnitt hin heraufziehen kann. Durch Gegenkräfte kann der Schwerkraft ebenfalls entgegengewirkt werden, wie z. B. durch Anblasen mit vorzugsweise erwärmtem Gas, einem Magnetfeld oder mechanisch, z. B. durch Stossen nach oben.

Zur Durchführung des Verfahrens eignet sich eine Vorrichtung, bei der auf einem Träger aufeinanderfolgend Mittel zum Festhalten von Streckenabschnitten des Drahtzuges in Festhalteabschnitten angeordnet sind, die mittels des Trägers durch mindestens einen sich in einem Winkel von 45° bis 90° zur Horizontalen erstreckenden Aufschmelzsektor förderbar sind, und mindestens eine Aufschmelzeinrichtung vorliegt. Die Festhalteabschnitte können dabei auf einer zylinderförmigen Trommel als Träger angebracht sein, die drehbar und antreibbar gelagert ist, so dass die festgehaltenen Drahtabschnitte in vorteilhafter Weise auf einer im wesentlichen kreisförmigen Bahn befördert werden können, auf welcher das Erhitzen, Aufschmelzen und Erstarren des Drahtmaterials an den Enden in aufeinanderfolgenden, den Winkelsegmenten der kreisförmigen Bahn entsprechenden Zonen oder Sektoren erfolgen kann. Hierdurch wird z. B. eine besonders platzsparende Vorrichtung ermöglicht. Die Festhalteabschnitte sind dabei mit den Festhaltemitteln vorzugsweise durch einen Befestigungssektor zum Befestigen der Drahtabschnitte, einen ersten Aufschmelzsektor, einen zweiten Aufschmelzsektor und einen Freigabesektor zum Freigeben der Bindedrähte mit dem verdickten Enden förderbar. Nach Ausbildung und Erstarrung der Verdickung am anderen Ende der Drahtabschnitte können dieselben dann im Freigabesektor freigegeben und danach abgeleitet und gesammelt werden. Die Förderung, z. B. auf der kreisförmigen Bahn, kann kontinuierlich oder diskontinuierlich, z. B. schrittweise, erfolgen.

Die Festhaltemittel können als übliche Klemmeinrichtung ausgebildet sein, denen Freigabemittel zum Freigeben der abgetrennten Drahtabschnitte zugeordnet sein können.

Die Erfindung ist nachstehend in Ausführungsbeispielen anhand der Zeichnung näher erläutert. Es zeigen:

Fig. 1 eine Vorrichtung zur Herstellung von verdickte Enden aufweisenden Bindedrähten in schematischer Darstellung,

Fig. 2 eine andere Ausführungsform einer Vorrichtung zur Herstellung von verdickte Endenaufweisenden Bindedrähten in schematischer Darstellung,

Fig. 3 eine Vorrichtung zur Herstellung von verdickte Enden aufweisenden Bindedrähte mit zwei Stationen in schematischer Darstellung und

Fig. 4 eine Vorrichtung zur Herstellung von verdickte Enden aufweisenden Bindedrähten mit einer Vielzahl von Stationen in schematischer Darstellung.

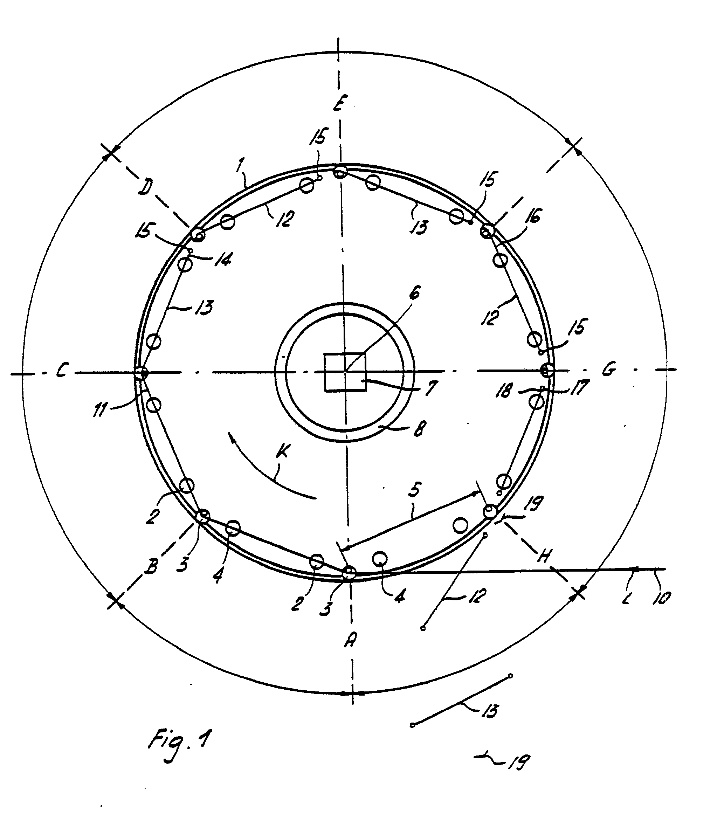

Gemäss Fig. 1 sind auf einem Träger in Form einer Trommel 1 aufeinanderfolgend und in Reihe mehrere Klemmittel 2, 3, 4 z. B. in Form von Klemmbacken angeordnet, wobei jeweils zwischen zwei Klemmitteln 3 ein Festhalteabschnitt 5 vorliegt. Die kreisförmige Trommel 1 ist in ihrem Zentrum 6 drehbar gelagert und in Richtung von Pfeil K antreibbar. Die Klemmittel 2, 3, 4 z. B. die Klemmbacken, können aus elektrisch leitendem Material hergestellt und entsprechend gegenüber der Trommel 1 isoliert sein oder besitzen entsprechende elektrische Führungen zu ihren Klemmflächen. Bei Drehung der Trommel 1 in Richtung von Pfeil K werden die Klemmittel 2, 3, 4 aufeinanderfolgend durch einen Klemmsektor AB, einen ersten Erwärmungs- und Aufschmelzsektor BCD, einen Umkehrsektor DEF, einen zweiten Erwärmungs- und Aufschmelzsektor FGH und einen Freigabesektor HA gefördert. Während des Durchlaufs durch den ersten Erwärmungs- und Aufschmelzsektor BCD werden die beiden Klemmittel 3 und 4, die paarweise an dem jeweiligen Ende der Festhalteabschnitte 5 vorliegen, elektrisch, z. B. durch Schleifkontakte, und über eine Schalteinrichtung an eine elektrische Spannungsquelle (nicht gezeigt) angeschlossen, sodass an die Klemmittel 3 und 4 eine elektrische Spannung angelegt wird. Beim nachfolgenden Durchlaufen der Sektoren DEF, FGH, HA und AB sind die Klemmittel 3, 4 von der Spannungsquelle getrennt. Im Erwärmungs- und Aufschmelzsektor FGH wird dagegen in der zuvor geschilderten gleichen Weise und hier über entsprechende elektrische Schleifkontakte an die Klemmittel 2 und 3 eine elektrische Spannung angelegt. Eine Steuereinrichtung 7 steuert, z. B. über die Schalteinrichtung, das Anlegen der elektrischen Spannung an die entsprechenden Klemmittel 3, 4 bzw. 2, 3, wenn dieselben in die Sektoren bzw. Zonen BCD bzw. FGH gelangen und z. B. auch einen elektrischen Antrieb 8 für die Trommel 1. Aus Uebersichtsgründen sind die vorbeschriebenen Teile rein schematisch dargestellt, da sie in Belieben des Fachmannes liegen.

Die Einrichtung arbeitet wie folgt:

Ein Draht 10, der in Richtung von Pfeil L der Trommel 1 kontinuierlich zugeführt wird, wird infolge Drehung der Trommel 1 in Richtung von Pfeil K aufeinanderfolgend durch die Klemmittel 2, 3, 4 erfasst und dort in Form von Drahtabschnitten in den Festhalteabschnitten 5 eingeklemmt. Die weitere Betriebsweise wird anhand von zwei aufeinanderfolgenden Drahtabschnitten 12 und 13 beschrieben. Gelangen die Klemmittel 3 und 4 in die Teilzone BC, so liegt elektrische Spannung an denselben an und infolge Verbindung der beiden Klemmittel 3 und 4 durch das Drahtstück oder Drahtteilstück 11 wird das letztere erwärmt. Im Teilsektor CD erhitzt sich das Drahtstück 11 so weit, dass es auf- bzw. durchschmilzt und dabei der vorlaufende Drahtabschnitt 12 von dem noch mit dem Draht 10 verbundenen Drahtabschnitt 13 abgetrennt wird. Dabei schmilzt am vorlaufenden Ende 14 des nachfolgenden Drahtabschnittes 13 das Material des Drahtstückes 11 zu einer Verdickung 15 zusammen. Die Erwärmung bzw. Erhitzung des Drahtabschnittes 13 erfolgt während des gesamten Durchlaufs durch den Aufschmelzsektor BCD und erreicht im Teilsektor CD dann eine Temperatur, bei der das Material des Drahtstückes 11 durchschmelzen kann. Dieses hängt z. B. vom Material, der Umdrehungsgeschwindigkeit der Trommel und/oder der Länge des Aufschmelzsektors BCD ab. Da der Aufschmelzsektor BCD sich im wesentlichen vertikal erstreckt kann sich die Verdickung 15 am aufwärtsstehenden bzw. nach oben gerichteten Ende 14 ohne abzufallen ausbilden. Durch die nach oben gerichtete Stellung des Endes 14 infolge der im wesentlichen vertikalen Stellung des Drahtabschnittes 13 wirkt die Schwerkraft im wesentlichen in Richtung der Längsachse des Drahtabschnittes 13. Beim Durchlauf des nachlaufenden Endes des Drahtabschnittes 13 durch den Teilsektor CD erfolgt das Abtrennen des Drahtabschnittes in der zuvor beschriebenen Weise.

Der abgetrennte und bereits mit der Verdickung 15 am vorlaufenden Ende ausgebildete Drahtabschnitt 12 gelangt durch eine Umkehrzone DEF, in welcher der Drahtabschnitt 12 um im wesentlichen 180° gekehrt wird, sodass derselbe im Aufschmelzsektor FGH und damit sein nachlaufendes Ende wiederum in eine im wesentlichen aufwärts bzw. nach oben gerichtete Stellung gelangt. In der zweiten Erwärmungs- und auch Aufschmelzzone FGH fliesst dann infolge der nunmehr an die beiden Klemmitteln 2 und 4 angelegten Spannung ein elektrischer Strom durch das Drahtstück 16 zwischen den beiden Klemmitteln 2 und 4 wodurch dieses beim Durchlauf durch den Aufschmelzsektor FGH soweit erwärmt wird, dass ein Aufschmelzen desselben erfolgt. Es bildet sich dann eine Verdickung 17 am nachlaufenden Ende 18 des Drahtstückes 12 in gleicher Weise wie im ersten Aufschmelzsektor BCD aus. Auch hier erfolgt im Teilsektor F-G zunächst nur Erwärmung und das Aufschmelzen des nachlaufenden freien Endes 18 erfolgt dann im Teilsektor GH. Anschliessend gelangt der Drahtabschnitt 12 mit den beiden Verdickungen 15 und 17 in den Freigabesektor HA, wo der Drahtabschnitt 12 freigegeben wird.

Die an den beiden Drahtabschnitten 12 und 13 dargestellten Vorgänge des Erwärmens, Aufschmelzens, Umkehrens, Erwärmens und Aufschmelzens des anderen Endes der Drahtabschnitte 12 und 13 wiederholt sich bei der Drehung der Trommel 1 auch an den nachfolgenden Drahtabschnitten des Drahtes 10, sodass kontinuierlich Drahtabschnitte mit Verdickungen an beiden Enden hergestellt und angeliefert werden können.

Vorzugsweise werden die aufeinanderfolgenden Drahtabschnitte 12, 13 nach ihrer Freigabe mittels einer Führung abgeführt (nicht gezeigt) und gesammelt. Gleichzeitig mit der Freigabe der Drahtabschnitte 12, 13 wird auch das am Klemmteil 3 befindliche Abfallstück 19 von dem letzteren freigegeben und abgeworfen. Damit stehen die Klemmteile 2, 3, 4 für einen erneuten Durchlauf wieder frei zur Verfügung.

Wie bereits erwähnt, kann die Länge der Aufschmelzzonen BCD bzw. FGH massgebend sein. Aber auch die Anzahl dieser Stationen kann eine Rolle spielen wie nachstehend noch erläutert wird.

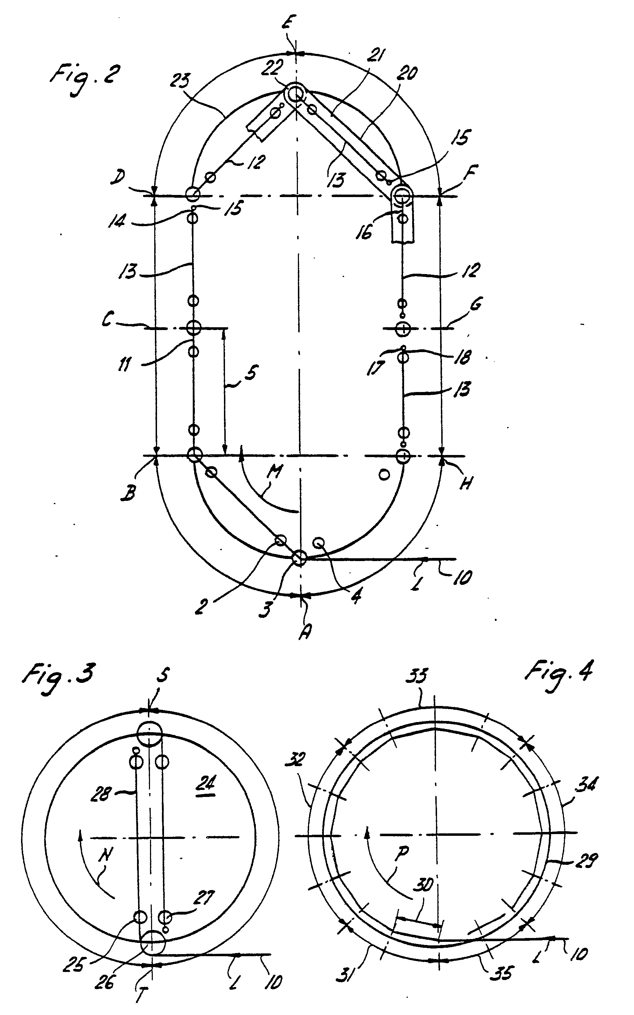

Fig. 2, in welcher mit Fig. 1 gleiche Teile die gleichen Bezugszeichen haben, zeigt eine Ausführungsform in welcher die Erwärmungs- und Aufschmelzsektoren BCD und FGH genau vertikal angeordnet sind, sodass die Drahtabschnitte 12 bzw. 13 in vertikaler Stellung ihrer Enden 14 bzw. 18 aufgeschmolzen und die Verdickung erfindungsgemäss hergestellt werden kann. Die Klemmittel 2, 3, 4 befinden sich dabei auf einem Träger 20, der aus Gründen der Uebersicht nur teilweise gezeigt aus Trägerteilen 21, z. B. Kettenglieder, bestehen kann, die an ihren Enden 22 gelenkig miteinander verbunden sind. Der Träger 20 kann auf einer Bahn 23 in Richtung von Pfeil M gefördert werden. Durch die genau vertikal angeordneten Aufschmelzzonen BCD und FGH kann eine Geschwindigkeitserhöhung des Durchlaufs der Drahtabschnitte und damit eine Erhöhung der Produktion derselben erfolgen, ohne dass Zentrifugalkräfte in den Aufschmelzzonen wirksam werden können. Das Erwärmen und Aufschmelzen zum Abtrennen der Drahtabschnitte sowie das Umkehren und erneute zweite Aufschmelzen erfolgt in der gleichen Weise wie bei der Ausführungsform nach Fig. 1 beschrieben, weshalb auf diese verwiesen wird.

Nach Fig. 3 liegen auf einem Träger 24, z. B. einer kreisförmigen Scheibe, Klemmittel 25, 26 und 27 vor, wobei der Träger 24 in Richtung von Pfeil N drehbar antreibbar ist. Bei Drehung des Trägers 21 wird der Draht 10 aufeinanderfolgend von den Klemmitteln 25, 26, 27 erfasst und in eine vertikale Stellung gebracht, wie sie Fig. 2 zeigt, in welcher sich der Drahtabschnitt 28 dann in einem vertikalen Aufschmelzsektor ST befindet. Durch weitere Drehung des Trägers 24 wird der Drahtabschnitt 28 dann mit seiner Längsachse um 180° umgekehrt. Er gelangt dadurch dann wiederum in eine vertikale Stellung entsprechend dem Aufschmelzsektor TS. Bei weiterer Drehung des Trägers 21 kann dann der Drahtabschnitt 28 freigegeben und abgeführt werden. Die Einklemmung von nachfolgenden Drahtabschnitten erfolgt dann wie vorstehend beschrieben. Das Erwärmen und Aufschmelzen sowie Abtrennen der einzelnen Drahtabschnitte und Anbringen der Verdickung erfolgt zwischen den Klemmteilen 25, 26, 27 in der gleichen Weise wie bei der Ausführungsform nach Fig. 1 beschrieben.

Fig. 4 zeigt noch einen Träger 29, z. B. eine Trommel, welche bei ihrer Drehung in Richtung von Pfeil P den Draht 10 in mehreren aufeinanderfolgend durch einen Festhalteabschnitt 30 durch einen Klemnsektor 31, ersten Erwärmungs- und Aufschmelzsektor 32, einen Umkehrsektor 33, einen zweiten Aufschmelzsektor 34 und einen Freigabesektor 35 fördert. Die Drahtabschnitte können dabei in der gleichen Weise wie für die Ausführungsform nach Fig. 1 beschrieben geklemmt und thermisch behandelt werden, um an ihren beiden Enden eine Verdickung zu erhalten. Die einzelnen vorgenannten Sektoren sind mehrfach unterteilt und ergeben eine Vielzahl von einzelnen Stationen, durch welche die Drahtabschnitte hindurchgefördert werden. Durch die Vielzahl von Stationen in den einzelnen Sektoren werden die letzteren z. B. verlängert. Ohne wesentliche Erhöhung der Umfangsgeschwindigkeit kann auf diese Weise ein höherer Durchsatz erfolgen. Dabei wird durch die Vielzahl der Stationen ein geringerer Verschleiss an den einzelnen Stationen, z. B. den Klemmelektroden, hervorgerufen. Darüber hinaus wird durch die Vervielfachung der Stationen eine Umfangsvergrösserung der Trommel erreicht, wodurch eine bessere vertikale Stellung der Drahtabschnitte in den Aufschmelzsektoren erzielt werden kann.

Die Fördergeschwindigkeit der Drahtabschnitte, Länge der verschiedenen Sektoren bzw. Zonen werden vorzugsweise in Abhängigkeit vom Drahtmaterial, z. B. dessen Schmelzpunkt, Wärmeleitfähigkeit, elektrischen Wiederstand oder dergleichen gewählt. Das Aufschmelzen kann durch Widerstandsheizung, Hochfrequenzheizung, Flammenerhitzung, Wärmestrahlung oder Ultraschall erfolgen. Als Drahtmaterial können metallische Werkstoffe, vorzugsweise Stahldraht mit einer Zugfestigkeit von 30-50 kg/mm$^2$ (3-5 · 10$^8$Pa) verwendet werden. Es können aber auch entsprechend geeignete Kunststoffe eingesetzt werden.

Ein Umkehren der Drahtabschnitte ist nicht immer erforderlich. So können die Drahtabschnitte z. B. in herabhängender Form aufgeschmolzen und vom Draht getrennt werden. Der Drahtabschnitt kann dann in seiner gleichen z. B. vertikalen Stellung an einen anderen Ort der Vorrichtung überführt und dort am anderen Ende mit der Verdickung versehen werden, wie es oben beschrieben wurde. Auch ist es z. B. möglich nach dem Aufschmelzen zum Abtrennen und Anbringen der Verdickung an dem einen Ende, die Verdickung an dem anderen Ende des jeweiligen Drahtabschnittes an der gleichen Stelle der Vorrichtung auszubilden und den Drahtabschnitt dann anschliessend freizugeben.

**Patentansprüche**

1. Verfahren zur Herstellung von verdickte Enden aufweisenden Bindedrähten zum Binden von gebündelten Gegenständen, Betonarmierungseisen und Säcken, indem die Verdickungen durch Aufschmelzen der Enden eines Drahtabschnittes ausgebildet werden, dadurch gekennzeichnet, dass aufeinanderfolgend geförderte festgehaltene Abschnitte (12, 13 ; 28) eines Drahtes (10) in einer einem Winkel von 45° bis 90° zur Horizontalen geneigten Stellung durch Aufschmelzen von demselben abgetrennt werden und dadurch die Verdickung (15, 17) an dem einen Ende (14) der Drahtabschnitte (12, 13 ; 28) ausgebildet wird und nachfolgend die Verdickung (15) des anderen Endes (18) des Drahtabschnittes (12, 13, 28) durch Aufschmelzen in einer einem Winkel von 45° bis 90° zur Horizontalen geneigten Stellung desselben ausgebildet wird.

2. Verfahren nach Anspruch 1, dadurch gekennzeichnet, dass die Abschnitte (12, 13 ; 28) des Drahtes (10) aufeinanderfolgend in einer Klemmzone (5) eingeklemmt und durch eine erste Schmelzzone (BCD ; ST ; 32) zum Abtrennen des Drahtabschnittes (12, 13 ; 28) und zum Ausbilden des verdickten einen Endes (14) durch das Aufschmelzen, durch eine zweite Schmelzzone (FGH ; TS ; 34) zum Ausbilden des verdickten anderen Endes (18) des Drahtabschnittes (12, 13 ; 28) und durch eine Freigabezone (HA) zum Freigeben des die beiden verdickten Enden (14 ; 18) aufweisende Drahtabschnittes (12, 13 ; 28) gefördert werden.

3. Verfahren nach Anspruch 1 oder 2, dadurch gekennzeichnet, dass durch das Aufschmelzen der in Förderrichtung vorderste Drahtabschnitt (12) abgetrennt und dadurch am vorlaufenden Ende (14) des nachfolgenden Drahtabschnittes (13) die Verdickung (15) ausgebildet wird.

4. Verfahren nach Anspruch 3, dadurch gekennzeichnet, dass der Drahtabschnitt (12) mit dem verdickten vorlaufenden Ende (14) durch das Aufschmelzen vom Draht (10) abgetrennt, anschliessend mit seiner Längsachse mindestens im wesentlichen um 180° gekehrt und die Verdickung (15) an seinem anderen Ende (18) ausgebildet wird.

5. Verfahren nach Anspruch 1 oder 2, dadurch gekennzeichnet, dass der in Förderrichtung vorderste Drahtabschnitt durch das Aufschmelzen abgetrennt und dadurch am nachlaufenden Ende die Verdickung ausgebildet wird.

6. Verfahren nach Anspruch 5, dadurch gekennzeichnet, dass die abgetrennten Drahtabschnitte mit dem verdickten nachlaufenden Ende mit ihrer Längsachse um mindestens im wesentlichen 180° gekehrt und die Verdickung an ihrem anderen Ende ausgebildet wird.

7. Verfahren nach Anspruch 5, dadurch gekennzeichnet, dass der Drahtabschnitt von seinem nachlaufenden Ende weg zusätzlich erwärmt wird.

8. Verfahren nach Anspruch 5, dadurch gekennzeichnet, dass auf das nachlaufende Ende der Schwerkraft entgegenwirkende Kräfte, z. B. Magnetkraft, mechanische Kraft, z. B. Stosskraft, oder eine Anblaskraft, aufgebracht werden.

9. Verfahren nach einem der Ansprüche 1 bis 8, dadurch gekennzeichnet, dass die festgehaltenen Drahtabschnitte (12, 13 ; 28) auf einer im wesentlichen kreisförmigen Bahn befördert werden, auf welcher das Erhitzen, Aufschmelzen und Erstarren des Drahtmaterials an den Enden in aufeinanderfolgenden Winkelsegmenten der Bahn erfolgt.

10. Verfahren nach einem der Ansprüche 1 bis 9, dadurch gekennzeichnet, dass das Aufschmelzen zum Abtrennen und zur Ausbildung der Verdickung (15, 17) an den Enden der Drahtabschnitte (12, 13, 28) durch Widerstandsheizung, Hochfrequenzheizung, Flammenerhitzung, Wärmestrahlung oder Ultraschall erfolgt.

11. Vorrichtung zur Durchführung des Verfahrens nach Anspruch 1, mit einer Aufschmelzeinrichtung für die Enden der Bindedrähte (12), dadurch gekennzeichnet, dass auf einem Träger (1 ; 20 ; 24 ; 29) aufeinanderfolgend Mittel (2, 3, 4 ; 25, 26, 27) zum Festhalten von Abschnitten (12, 13 ; 28) eines Drahtzuges (10) in Festhalteabschnitten (5) angeordnet sind, die mittels des Trägers (1 ; 20 ; 24 ; 29) durch mindestens einen in einem Winkel von 45°-90° zur Horizontalen sich erstreckenden Aufschmelzsektor (BCD, FGH ; ST ; 32, 34) förderbar sind, und mindestens eine Aufschmelzeinrichtung (3, 4 ; 25, 26) vorgesehen ist.

12. Vorrichtung nach Anspruch 11, dadurch gekennzeichnet, dass die Festhalteabschnitte (5) mit den Festhaltemitteln (2, 3, 4 ; 25, 26, 27) durch einen Befestigungssektor AB zum Befestigen der Drahtabschnitte (12, 13, 28) einen ersten Aufschmelzsektor (BCD), einen zweiten Aufschmelzsektor (FGH) und einen Freigabesektor (HA) förderbar sind.

13. Vorrichtung nach Anspruch 11 oder 12, dadurch gekennzeichnet, dass die Festhaltemittel (2, 3, 4) in Reihe auf einer zylinderförmigen Trommel (1) als Träger angebracht sind, die drehbar antreibbar gelagert sind.

14. Vorrichtung nach einem der Ansprüche 11 bis 13, dadurch gekennzeichnet, dass an den Enden der Festhalteabschnitte je ein Paar (2, 3 ; 3, 4) der Festhaltemittel (2, 3, 4) mit einer elektrischen Spannungsquelle verbindbar sind.

15. Vorrichtung nach einem der Ansprüche 11 bis 14, dadurch gekennzeichnet, dass die Festhaltemittel (2, 3, 4) als Klemmeinrichtungen ausgebildet sind.

16. Vorrichtung nach einem der Ansprüche 11 bis 15, dadurch gekennzeichnet, dass den Festhaltemitteln (2, 3, 4) Freigabemittel zum Freigeben zugeordnet sind.

## Claims

1. Process for the production of binding wires, having thickened ends, for the binding of bundled objects, concrete reinforcing steels and sacks, by the thickenings being formed by melting of the ends of a wire section, characterized in that successively fed, firmly held sections (12, 13 ; 28) of a wire (10) are separated from the same by melting in a position inclined at an angle of 45° to 90° to the horizontal and thereby the thickening (15, 17) is formed at the one end (14) of the wire sections (12, 13 ; 28) and subsequently the thickening (15) of the other end (18) of the wire section (12, 13, 28) is formed by melting in a position of the same inclined at an angle of 45° to 90° to the horizontal.

2. Process according to Claim 1, characterized in that the sections (12, 13 ; 28) of the wire (10) are successively clamped in a clamping zone (5) and fed through a first melting zone (BCD ; ST ; 32) for the separating of the wire section (12, 13 ; 28) and for the forming of the thickened one end (14) by the melting, through a second melting zone (FGH ; TS ; 34) for the forming of the thickened other end (18) of the wire section (12, 13 ; 28) and through a release zone (HA) for the releasing of the wire section (12, 13 ; 28) having the two thickened ends (14 ; 18).

3. Process according to Claim 1 or 2, characterized in that, due to the melting, the forwardmost wire section (12) in feed direction is separated and the thickening (15) is thereby formed on the leading end (14) of the following wire section (13).

4. Process according to Claim 3, characterized in that the wire section (12) with the thickened leading end (14) is separated from the wire (10) by the melting, is subsequently turned with its longitudinal axis at least substantially through 180° and the thickening (15) is formed at its other end (18).

5. Process according to Claim 1 or 2, characterized in that the forwardmost wire section in feed direction is separated by the melting and the thickening is thereby formed on the trailing end.

6. Process according to Claim 5, characterized in that the separated wire sections with the thickened trailing end are turned with their longitudinal axis at least substantially through 180° and the thickening is formed at their other end.

7. Process according to Claim 5, characterized in that the wire section is additionally heated, away from its trailing end.

8. Process according to Claim 5, characterized in that forces opposing the force of gravity, for example magnetic force, mechanical force, for example impact force, or a blasting force, are applied to the trailing end.

9. Process according to one of Claims 1 to 8, characterized in that the firmly held wire sections (12, 13 ; 28) are conveyed on a substantially circular track, on which the heating, melting and solidifying of the wire material at the ends takes place in successive angular segments of the track.

10. Process according to one of Claims 1 to 9, characterized in that the melting for the separating and forming of the thickening (15, 17) at the ends of the wire sections (12, 13, 28) takes place by resistance heating, high-frequency heating, flame heating, heat radiation or ultrasonics.

11. Apparatus for implementation of the process according to Claim 1, with a melting device for the ends of the binding wires (12), characterized in that, on a carrier (1 ; 20 ; 24 ; 29), there are successively arranged means (2, 3, 4 ; 25, 26,

27) for the firm holding of sections (12, 13 ; 28) of a wire line (10) in firm-holding sections (5), which can be fed by means of the carrier (1 ; 20 ; 24 ; 29) through at least one melting sector (BCD, FGH ; ST ; 32, 34), extending at an angle of 45°-90° to the horizontal, and at least one melting device (3, 4 ; 25, 26) is provided.

12. Apparatus according to Claim 11, characterized in that the firm-holding sections (5) can be fed by the firm-holding means (2, 3, 4 ; 25, 26, 27) through a fastening sector (AB) for the fastening of the wire sections (12, 13, 28), a first melting sector (BCD), a second melting sector (FGH) and a release sector (HA).

13. Apparatus according to Claim 11 or 12, characterized in that the firm-holding means (2, 3, 4) are attached in series on a cylindrical drum (1) as carrier, which is mounted in rotationally drivable manner.

14. Apparatus according to one of Claims 11 to 13, characterized in that a pair (2, 3 ; 3, 4) of the firm-holding means (2, 3, 4) can be connected to an electric voltage source at each of the ends of the firm-holding sections.

15. Apparatus according to one of Claims 11 to 14, characterized in that the firm-holding means (2, 3, 4) are designed as clamping devices.

16. Apparatus according to one of Claims 11 to 15, characterized in that the firm-holding means (2, 3, 4) are assigned release means for the releasing.

### Revendications

1. Procédé pour fabriquer des fils de liaison présentant des extrémités épaissies pour relier des objets en faisceau, des fers d'armement de béton et des sacs, en réalisant les épaississements par fusion des extrémités d'une section de fil, caractérisé en ce que des sections (12, 13 ; 28) d'un fil (10) maintenues et transportées l'une derrière l'autre sont séparées par fusion dans une position inclinée sur l'horizontale selon un angle de 45° à 90° et, de ce fait, l'épaississement (15, 17) est réalisé sur une extrémité (14) des sections de fil (12, 13 ; 28) et ensuite l'épaississement (15) de l'autre extrémité (18) de la section de fil (12, 13 ; 28) est réalisé par fusion dans une position inclinée sur l'horizontale faisant un angle de 45° à 90°.

2. Procédé selon la revendication 1, caractérisé en ce que les sections (12, 13 ; 28) du fil (10) son coincées les unes derrière les autres dans une zone de serrage (5) et sont transportées à travers une première zone de fusion (BCD ; ST ; 32) pour séparer la section de fil (12, 13 ; 28) et pour réaliser l'une des extrémités épaissies (14) par fusion, à travers une deuxième zone de fusion (FGT ; TS ; 34) pour réaliser l'autre extrémité épaissie (18) de la section de fil (12, 13 ; 28) et à travers une zone de libération (HA) pour libérer la section de fil (12, 13 ; 28) présentant les deux extrémités épaissies (14 ; 18).

3. Procédé selon la revendication 1 ou la revendication 2, caractérisé en ce que par fusion la section de fil (12) la plus en avant dans la direction de transport est séparée et, de ce fait, l'épaississement (15) est réalisé sur l'extrémité avant (14) de la section de fil (13) qui suit.

4. Procédé selon la revendication 3, caractérisé en ce que la section de fil (12) avec l'extrémité (14) avant épaissie est séparée du fil (10) par fusion, ensuite est tournée sensiblement avec son axe longitudinal au moins sensiblement de 180° et l'épaississement (15) est réalisé sur son autre extrémité (18).

5. Procédé selon la revendication 1 ou la revendication 2, caractérisé en ce que la section de fil la plus en avant dans la direction de transport est séparée par la fusion et, de ce fait, l'épaississement est réalisé sur l'extrémité qui suit.

6. Procédé selon la revendication 5, caractérisé en ce que les sections de fil séparées avec l'extrémité épaissie qui suit sont tournées avec leur axe longitudinal au moins sensiblement de 180° et l'épaississement est réalisé sur leur autre extrémité.

7. Procédé selon la revendication 5, caractérisé en ce que la section de fil est chauffée addition-nellement à partir de son extrémité qui suit.

8. Procédé selon la revendication 5, caractérisé en ce que sur l'extrémité suivante on applique des forces opposées à la force de la pesanteur, par exemple une force magnétique, une force mécanique, par exemple une force de choc ou une force de soufflerie.

9. Procédé selon l'une quelconque des revendications 1 à 8, caractérisé en ce que les sections de fil (12, 13 ; 28) maintenues sont transportées sur un trajet sensiblement circulaire sur lequel ont lieu le chauffage, la fusion et la solidification de la matière du fil aux extrémités dans des segments angulaires consécutifs du trajet.

10. Procédé selon l'une quelconque des revendications 1 à 9, caractérisé en ce que la fusion pour la séparation et pour la réalisation de l'épaississement (15, 17) a lieu aux extrémités des sections de fil (12, 13, 28) par chauffage à résistance, chauffage haute fréquence, chauffage à la flamme, rayonnement thermique ou ultra-sons.

11. Dispositif pour mettre en œuvre le procédé selon la revendication 1, comprenant un dispositif de fusion pour les extrémités des fils de liaison (12), caractérisé en ce que sur un support (1 ; 20 ; 24 ; 29) on dispose consécutivement des moyens (2, 3, 4 ; 25, 26, 27) pour maintenir des sections (12, 13 ; 28) d'un élément de fil (10) dans des sections (5) de maintien que peuvent être transportées au moyen du support (1 ; 20 ; 24 ; 29) par au moins un secteur de fusion (BCD, FGH ; ST ; 32, 34) s'étendant selon un angle de 45° à 90° par rapport à l'horizontale et en ce qu'on prévoit au moins un dispositif de fusion (3, 4 ; 25, 26).

12. Dispositif selon la revendication 11, caractérisé en ce que les sections de maintien (5) avec les moyens de maintien (2, 3, 4 ; 25, 26, 27) peuvent être transportées à travers un secteur de fixation (AB) pour fixer les sections de fil (12, 13, 28), un premier secteur de fusion (BCD), un deuxième secteur de fusion (FGH) et un secteur de libération (HA).

13. Dispositif selon la revendication 11 ou la revendication 12, caractérisé en ce que les moyens de maintien (2, 3, 4) peuvent être disposés en série sur un tambour cylindrique (1) en tant que support qui est monté de façon à pouvoir être entraîné et à tourner.

14. Dispositif selon l'une des revendications 11 à 13, caractérisé en ce qu'aux extrémités des sections de maintien on peut relier une paire respective (2, 3 ; 3, 4) des moyens de maintien (2, 3, 4) à une source de tension électrique.

15. Dispositif selon l'une des revendications 11 à 14, caractérisé en ce que les moyens de maintien (2, 3, 4) son réalisés comme des dispositifs de serrage.

16. Dispositif selon l'une des revendications 11 à 15, caractérisé en ce que des moyens de libération pour réaliser la libération sont associés aux moyens de maintien (2, 3, 4).

Fig. 1

Fig. 2

Fig. 3

Fig. 4